# FASCICULE DE BREVET EUROPEEN

(11) **EP 3 862 595 B1**
(45) Date de publication et mention de la délivrance du brevet: **22.10.2025**
(21) Numéro de dépôt: 21153317.9
(22) Date de dépôt: 25.01.2021
(51) Int. Cl.: F16F 15/067

(54) **DISPOSITIF DE LIAISON ÉLASTIQUE ENTRE DEUX PIÈCES CONCENTRIQUES ET ASSEMBLAGE COMPORTANT UN TEL DISPOSITIF DE LIAISON ÉLASTIQUE**
ELASTISCHE VERBINDUNGSVORRICHTUNG ZWISCHEN ZWEI KONZENTRISCHEN TEILEN UND BAUGRUPPE MIT EINER SOLCHEN ELASTISCHEN VERBINDUNGSVORRICHTUNG
ELASTIC LINKING DEVICE BETWEEN TWO CONCENTRIC PARTS AND ASSEMBLY COMPRISING SUCH AN ELASTIC LINKING DEVICE

(30) Priorité: 07.02.2020 FR 2001227
(43) Date de publication de la demande: 11.08.2021
(73) Titulaire: Airbus Operations SAS, 31060 Toulouse (FR)
(72) Inventeur: CHIROL, Clément, 31060 TOULOUSE (FR); RAFIK, Vincent, 31060 TOULOUSE (FR)
(74) Mandataire: Fantin, Laurent

(56) Documents cités:
- EP-A1- 2 265 841
- CN-A- 106 195 104
- FR-A1- 2 738 861
- US-A1- 2012 048 156
- US-B1- 7 320 389

## Description

La présente demande se rapporte à un dispositif de liaison élastique entre deux pièces concentriques ainsi qu'à un assemblage comportant un tel dispositif de liaison élastique.

Selon un mode de réalisation connu de l'art antérieur, un assemblage comprend une première pièce qui présente un orifice ainsi qu'une deuxième pièce traversant l'orifice et reliée à la première pièce par un dispositif de liaison. Pour limiter la propagation des vibrations d'une pièce à l'autre, le dispositif de liaison comprend une bague en élastomère intercalée entre les première et deuxième pièces. Ce mode de réalisation est limité aux vibrations de faibles amplitudes et ne convient pas pour les amplitudes importantes.

Selon des modes de réalisation décrits dans les documents EP2265841, US7320389, CN106195104, un dispositif de liaison élastique configuré pour relier des première et deuxième pièces concentriques comprend une première bague solidaire de la première pièce, une deuxième bague solidaire de la deuxième pièce ainsi qu'un ensemble d'éléments de rappel et/ou de ressorts reliant les première et deuxième bagues répartis de manière régulièrement sur toute la circonférence des premier et deuxième bagues. Ce type de dispositif tolère des vibrations de grandes amplitudes. Toutefois, ce mode de réalisation n'est pas satisfaisant car les ressorts ne sont pas protégés.

La présente invention vise à remédier à tout ou partie des inconvénients de l'art antérieur.

A cet effet, l'invention a pour objet un dispositif de liaison élastique configuré pour relier des première et deuxième pièces, comprenant des première et deuxième bagues espacées l'une de l'autre et reliées par au moins deux sous-ensembles cinématiques, les première et deuxième bagues étant configurées pour occuper un premier état dans lequel la deuxième bague occupe des positions radiale et axiale données par rapport à la première bague ainsi qu'un deuxième état dans lequel la deuxième bague est décalée de la position radiale donnée et/ou de la position axiale donnée par rapport à la première bague, les sous-ensembles cinématiques étant configurés pour permettre aux première et deuxième bagues de bouger l'une par rapport à l'autre selon au moins une direction axiale et/ou au moins une direction radiale, chaque sous-ensemble cinématique comportant un élément de rappel configuré pour maintenir les première et deuxième bagues dans le premier état.

Selon l'invention, chaque sous-ensemble cinématique comprend au moins un élément radial comportant un corps cylindrique, au moins deux liaisons de type rotule ainsi qu'au moins une liaison de type glissière ou pivot glissant. En complément, pour chaque élément radial, la deuxième bague comprend un logement radial et, pour chaque sous-ensemble cinématique, l'élément de rappel est intercalé entre un fond du logement radial et le corps cylindrique de l'élément radial.

En fonctionnement, le dispositif de liaison élastique autorise un débattement axial et/ou radial relativement important entre les deux pièces qu'il relie. De plus, si l'une des deux pièces est soumise à des vibrations, le dispositif de liaison élastique absorbe les déformations et limite la propagation des vibrations vers l'autre pièce. Enfin, chaque élément de rappel est positionné dans un logement de manière à être protégé.

Selon une autre caractéristique, chaque sous-ensemble cinématique comprend au moins un élément radial, au moins deux liaisons de type rotule ainsi qu'au moins une liaison de type glissière ou pivot glissant. En complément, pour chaque élément radial, la deuxième bague comprend un logement radial et, pour chaque sous-ensemble cinématique, l'élément de rappel est intercalé entre un fond du logement radial et le corps cylindrique de l'élément radial.

Selon une autre caractéristique, le dispositif de liaison élastique comprend trois sous-ensembles cinématiques répartis sur la circonférence de la première ou deuxième bague.

Selon une autre caractéristique, pour chaque sous-ensemble cinématique, l'élément radial est relié d'une part à la première bague par une première liaison de type rotule et d'autre part à la deuxième bague par une deuxième liaison de type rotule et une liaison de type glissière ou pivot glissant.

Selon une autre caractéristique, chaque élément radial comprend une tête sphérique solidaire du corps cylindrique. En complément, pour chaque élément radial, la première bague comprend un siège sphérique configuré pour recevoir la tête sphérique de l'élément radial et formant avec cette dernière la première liaison de type rotule.

Selon une autre caractéristique, chaque sous-ensemble cinématique comprend une rotule configurée pour se loger dans un des logements radiaux.

Selon une autre caractéristique, pour chaque sous-ensemble cinématique, la rotule et le corps cylindrique de l'élément radial sont configurés pour permettre au corps cylindrique de coulisser par rapport à la rotule afin d'obtenir la liaison de type glissière ou pivot glissant entre eux.

Selon une autre caractéristique, chaque élément élastique est un ressort de compression.

L'invention a également pour objet un assemblage comprenant une première pièce comportant un orifice, une deuxième pièce traversant l'orifice ainsi qu'un dispositif de liaison élastique, selon l'une des caractéristiques précédentes, intercalé entre les première et deuxième pièces et les reliant.

D'autres caractéristiques et avantages ressortiront de la description de l'invention qui va suivre, description donnée à titre d'exemple uniquement, en regard des dessins annexés parmi lesquels :
- La figure 1 est une coupe longitudinale d'un assemblage comprenant un dispositif de liaison élastique illustrant un premier mode de réalisation de l'invention,
- La figure 2 est une coupe transversale selon la ligne II-II de la figure 1,
- La figure 3 est une vue en perspective d'un dispositif de liaison élastique illustrant un deuxième mode de réalisation de l'invention,
- La figure 4 est une coupe transversale selon le plan IV de la figure 3,
- La figure 5 est un schéma cinématique d'un dispositif de liaison élastique illustrant un mode de réalisation de l'invention dans un état d'équilibre,
- La figure 6 est un schéma cinématique du dispositif de liaison élastique visible sur la figure 5 lors d'une déformation radiale, et
- La figure 7 est un schéma cinématique du dispositif de liaison élastique visible sur la figure 5 lors d'une déformation axiale.

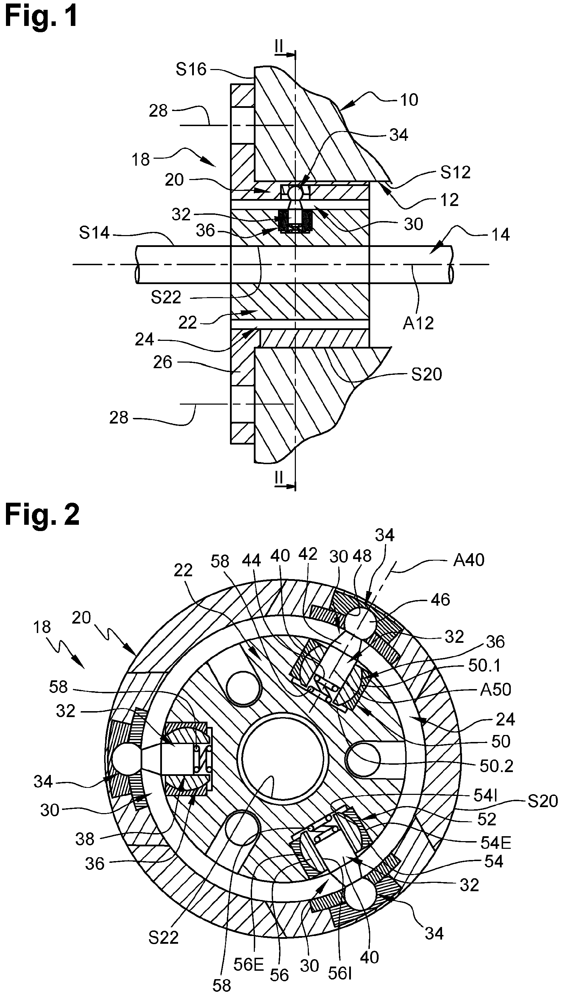

Selon un mode de réalisation visible sur la figure 1, un assemblage comprend une première pièce 10 comportant un orifice 12 ainsi qu'une deuxième pièce 14 traversant l'orifice 12. L'orifice 12 présente un axe A12.

Pour la suite de la description, une direction longitudinale est parallèle à l'axe A12. Une direction axiale est confondue avec l'axe A12. Un plan longitudinal contient l'axe A12. Une direction radiale est une direction perpendiculaire à l'axe A12. Un plan transversal est perpendiculaire à l'axe A12.

Selon une configuration, l'orifice 12 est cylindrique et présente une face de contact intérieure S12 cylindrique. La deuxième pièce 14 est cylindrique et présente une face de contact extérieure S14 cylindrique. La première pièce 10 comprend une face de contact transversale S16 plane, entourant l'orifice 12, approximativement perpendiculaire à l'axe A12 de l'orifice 12.

Selon une application, la première pièce 10 est une paroi et la deuxième pièce 14 est un conduit ou un tube.

Les première et deuxième pièces 10 et 14 sont reliées par un dispositif de liaison élastique 18 intercalé entre les première et deuxième pièces 10, 14, plus précisément entre les faces de contact extérieure et intérieure S12, S14.

Le dispositif de liaison élastique 18 comprend des première et deuxième bagues 20, 22 espacées l'une de l'autre afin de délimiter entre elles un espace annulaire 24. Les première et deuxième pièces 20, 22 sont rigides.

Selon un mode de réalisation, la première bague 20 est positionnée autour de la deuxième bague 22 et reliée à la première pièce 10. La première bague 20 comprend une collerette 26 plaquée contre la face de contact transversale S16 en fonctionnement. La première bague 20 comprend une surface de contact extérieure S20 présentant un diamètre sensiblement égal à celui de la face de contact intérieure S12 de l'orifice 12. Selon ce mode de réalisation, l'assemblage comprend des éléments de fixation 28 reliant la collerette 26 et la première pièce 10, répartis autour de l'orifice 12 et orientés parallèlement à la direction longitudinale. La deuxième bague 22 comprend une surface de contact intérieure S22 présentant un diamètre sensiblement égal à celui de la face de contact extérieure S14 de la deuxième pièce 14. Selon un mode de réalisation, la deuxième bague 22 est collée sur la deuxième pièce 14. Bien entendu, l'invention n'est pas limitée à ce mode de réalisation concernant les liaisons entre d'une part les première et deuxième bagues 20, 22 et d'autre part les première et deuxième pièces 10, 14. Par ailleurs, la première bague 20 pourrait être reliée à la deuxième pièce 14 et la deuxième bague 22 positionnée autour de la première bague 20 et reliée à la première pièce 10.

Quel que soit le mode de réalisation, les première et deuxième bagues 20, 22 sont configurées pour occuper un premier état dit d'équilibre dans lequel la deuxième bague 22 occupe des positions radiale et axiale données par rapport à la première bague 20, ainsi qu'un deuxième état dans lequel la deuxième bague 22 est décalée de la position radiale donnée et/ou de la position axiale donnée par rapport à la première bague 20.

Selon une configuration, lorsque la deuxième bague 22 occupe la position radiale donnée, les première et deuxième bagues 20, 22 sont coaxiales, à savoir la surface de contact extérieure S20 de la première bague 20 et la surface de contact intérieure S22 de la deuxième bague 22 sont coaxiales.

Le dispositif de liaison élastique 18 comprend au moins deux sous-ensembles cinématiques 30, reliant les première et deuxième bagues 20, 22, positionnés dans l'espace annulaire 24, régulièrement répartis sur toute la circonférence de la première ou deuxième bague 20, 22. Selon des modes de réalisation visibles sur les figures 1 à 4, le dispositif de liaison élastique 18 comprend trois sous-ensembles cinématiques 30 formant entre eux des angles d'environ 120°.

Les sous-ensembles cinématiques 30 sont configurés pour permettre aux première et deuxième bagues 20, 22 de bouger l'une par rapport à l'autre selon au moins une direction axiale et/ou au moins une direction radiale.

Selon une configuration, les sous-ensembles cinématiques 30 sont tous identiques.

Chaque sous-ensemble cinématique 30 comprend au moins un élément radial 32, au moins deux liaisons de type rotule 34, 36 ainsi qu'au moins une liaison de type glissière ou pivot glissant 38.

Selon une configuration, pour chaque sous-ensemble cinématique 30, l'élément radial 32 est relié à la première bague 20 par une première liaison de type rotule 34 ainsi qu'à la deuxième bague 22 par une deuxième liaison de type rotule 36 et une liaison de type glissière ou pivot glissant 38.

Selon une autre configuration, chaque sous-ensemble cinématique 30 comprend un premier élément radial relié à la première bague 20 par une première liaison de type rotule 34, un deuxième élément radial relié à la deuxième bague 22 par une deuxième liaison de type rotule 36, les premier et deuxième éléments radiaux étant reliés entre eux par une liaison de type glissière ou pivot glissant 38.

Selon une autre configuration, chaque sous-ensemble cinématique 30 comprend un premier élément radial relié à la première bague 20 par une première liaison de type rotule 34, un deuxième élément radial relié à la deuxième bague 22 par une liaison de type glissière ou pivot glissant 38, les premier et deuxième éléments radiaux étant reliés entre eux par une liaison de type rotule 36.

Bien entendu, l'invention n'est pas limitée à ces combinaisons pour les éléments radiaux 32, les liaisons de type rotule 34, 36 et les liaisons de type glissière ou pivot glissant 38.

Chaque élément radial 32 comprend un corps cylindrique 40 présentant un axe A40, un tronçon tronconique 42 à une première extrémité orientée vers la première bague 20, ainsi qu'une face terminale 44 à une deuxième extrémité orientée vers la deuxième bague 22, ladite face terminale 44 étant plane et approximativement perpendiculaire à l'axe A40. En plus du corps cylindrique 40, chaque élément radial 32 comprend une tête sphérique 46 solidaire du corps cylindrique 40. Cette tête sphérique est rapportée au niveau de l'extrémité du tronçon tronconique 42 orientée vers la première bague 20, correspondant à la plus petite section du tronçon tronconique 42.

Pour chaque élément radial 32, la première bague 20 comprend un siège sphérique 48 configuré pour recevoir la tête sphérique 46 de l'élément radial 32 et formant avec cette dernière la première liaison de type rotule 34. Le siège sphérique 48 est configuré pour empêcher toute translation de la tête sphérique 46 par rapport au siège sphérique 48 en fonctionnement.

Pour chaque élément radial 32, la deuxième bague 22 comprend un logement radial 50 qui comporte une surface latérale cylindrique 50.1 présentant un axe A50, orienté selon une direction radiale, ainsi qu'un fond 50.2 plan et approximativement perpendiculaire à l'axe A50.

Chaque sous-ensemble cinématique 30 comprend une rotule 52 configurée pour se loger dans un des logements radiaux 50 et loger le corps cylindrique 40 de l'élément radial 32. Selon une configuration, la rotule 52 comprend des bagues extérieure et intérieure 54, 56. La bague extérieure 54 comprend une surface extérieure 54E présentant un diamètre extérieur égal à celui de la surface latérale cylindrique 50.1 d'un logement radial 50 et une surface intérieure 54I en contact avec la bague intérieure 56 en forme de portion de sphère. La bague intérieure 56 comprend une surface intérieure 56I cylindrique ainsi qu'une surface extérieure 56E en contact avec la bague extérieure 54, en forme de portion de sphère, ayant un diamètre égal à celui de la surface intérieure 54I de la bague extérieure 54.

En fonctionnement, la bague extérieure 54 est immobile dans le logement radial 50. Selon un mode de réalisation, la bague extérieure 54 peut être emmanchée en force ou collée dans son logement radial 50.

La rotule 52 et le corps cylindrique 40 de l'élément radial 32 sont configurés pour obtenir une liaison de type glissière ou pivot glissant entre eux.

Ainsi, la surface intérieure 56I de la bague intérieure 56 et le corps cylindrique 40 ont des diamètres sensiblement identiques pour permettre au corps cylindrique 40 de coulisser sans jeu à l'intérieur de la bague intérieure 56. Le corps cylindrique 40 et la bague intérieure 56 peuvent être réalisés en un matériau ou comprendre un revêtement favorisant le coulissement de l'un par rapport à l'autre.

Selon une caractéristique, chaque sous-ensemble cinématique 30 comprend un élément de rappel 58 configuré pour maintenir les première et deuxième bagues 20, 22 dans l'état d'équilibre dans lequel les première et deuxième bagues 20, 22 sont positionnées selon les positions radiale et axiale données.

Chaque élément de rappel 58 est positionné dans un logement, cylindrique, dans lequel coulisse de manière ajustée le corps cylindrique 40 d'un des éléments radiaux.

Selon un mode de réalisation, l'élément de rappel 58 est intercalé entre le fond 50.2 du logement radial 50 et la face terminale 44 du corps cylindrique 40 provoquant un déplacement approximativement radial de l'élément radial 32 qui tend à écarter ou rapprocher les première et deuxième bagues 20, 22.

Selon une configuration visible sur les figures 1 à 4, chaque élément de rappel 58 est un ressort de compression provoquant un déplacement centrifuge de l'élément radial 32 qui tend à écarter les première et deuxième bagues 20, 22.

Selon une autre configuration, chaque ressort de rappel 58 est un ressort de traction provoquant un déplacement centripète de l'élément radial 32 qui tend à rapprocher les première et deuxième bagues 20, 22.

Les éléments de rappel 58 des sous-ensembles cinématiques 30 sont tous identiques.

Les première et deuxième bagues 20, 22 sont configurées pour occuper l'état d'équilibre, visible sur les figures 2, 4 et 5, lorsqu'aucune d'elles n'est sollicitée par des efforts ou des vibrations, dans lequel les première et deuxième bagues 20, 22 sont positionnées selon les positions radiale et axiale données.

Lorsque les première et deuxième bagues 20, 22 sont à l'état d'équilibre, les axes A40 des éléments radiaux 32 sont orientés radialement.

Au moins l'une des première et deuxième bagues 20, 22 peut être soumise à des sollicitations, comme des vibrations par exemple, avec des amplitudes relativement importantes.

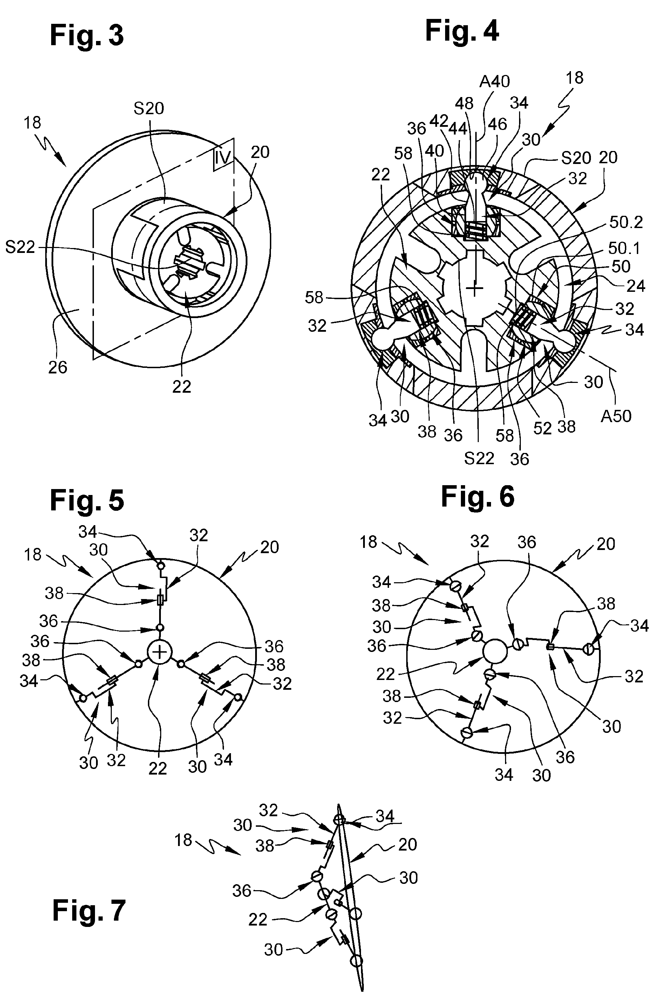

Selon un premier exemple visible sur la figure 6, les sollicitations peuvent être radiales provoquant un déplacement radial de la deuxième bague 22 par rapport à la première bague 20 ou vice versa. Dans ce cas, les axes A40 sont positionnés dans un plan radial et les axes A40 de certains éléments radiaux 32 peuvent être inclinés par rapport à une direction radiale.

Selon un deuxième exemple visible sur la figure 7, les sollicitations peuvent être axiales provoquant un déplacement axial de la deuxième bague 22 par rapport à la première bague 20 ou vice versa. Dans ce cas, les axes A40 des éléments radiaux 32 sont inclinés par rapport à un plan radial.

Bien entendu, l'invention n'est pas limitée à ce type de sollicitations, ces dernières pouvant être radiales et axiales.

Le dispositif de liaison élastique permet de maintenir la deuxième pièce 14 dans un état d'équilibre par rapport à la première pièce 10 dans lequel la deuxième pièce 14 occupe une position donnée par rapport à la première pièce 10, notamment centrée dans l'orifice 12. Le dispositif de liaison élastique autorise un déplacement axial et/ou radial de la deuxième pièce 14 par rapport à la première pièce 10 avec une amplitude relativement importante. Enfin, lorsque la deuxième pièce 14 est soumise à des vibrations, le dispositif de liaison élastique 18 absorbe les déformations et limite la propagation des vibrations vers la première pièce 10.

La première bague 20 peut être réalisée en plusieurs parties pour former les sièges sphériques 48 et permettre l'assemblage de la deuxième bague 22 sur laquelle sont rapportés les éléments radiaux 32.

La deuxième bague 22 peut être plus ou moins évidée, comme illustré sur les figures 2 et 4.

## Revendications

1. Dispositif de liaison élastique (18) configuré pour relier des première et deuxième pièces (10, 14), comprenant des première et deuxième bagues (20, 22) espacées l'une de l'autre, reliées par au moins deux sous-ensembles cinématiques (30) et configurées pour occuper un premier état dans lequel la deuxième bague (22) occupe des positions radiale et axiale données par rapport à la première bague (20) ainsi qu'un deuxième état dans lequel la deuxième bague (22) est décalée de la position radiale donnée et/ou de la position axiale donnée par rapport à la première bague (20), les sous-ensembles cinématiques (30) étant configurés pour permettre aux première et deuxième bagues (20, 22) de bouger l'une par rapport à l'autre selon au moins une direction axiale et/ou au moins une direction radiale, chaque sous-ensemble cinématique (30) comportant un élément de rappel (58) configuré pour maintenir les première et deuxième bagues (20, 22) dans le premier état, **caractérisé en ce que** chaque sous-ensemble cinématique (30) comprend au moins un élément radial (32) comportant un corps cylindrique (40), au moins deux liaisons de type rotule (34, 36) ainsi qu'au moins une liaison de type glissière ou pivot glissant (38) et **en ce que**, pour chaque élément radial (32), la deuxième bague (22) comprend un logement radial (50) et **en ce que**, pour chaque sous-ensemble cinématique (30), l'élément de rappel (58) est intercalé entre un fond (50.2) du logement radial (50) et le corps cylindrique (40) de l'élément radial (32).

2. Dispositif de liaison élastique (18) selon la revendication 1, **caractérisé en ce que** le dispositif de liaison élastique comprend trois sous-ensembles cinématiques (30) répartis sur la circonférence de la première ou deuxième bague (20, 22).

3. Dispositif de liaison élastique (18) selon l'une des revendications précédentes, **caractérisé en ce que**, pour chaque sous-ensemble cinématique (30), l'élément radial (32) est relié d'une part à la première bague (20) par une première liaison de type rotule (34) et d'autre part à la deuxième bague (22) par une deuxième liaison de type rotule (36) et une liaison de type glissière ou pivot glissant (38).

4. Dispositif de liaison élastique (18) selon la revendication précédente, **caractérisé en ce que** chaque élément radial (32) comprend une tête sphérique (46) solidaire du corps cylindrique (40) et **en ce que**, pour chaque élément radial (32), la première bague (20) comprend un siège sphérique (48) configuré pour recevoir la tête sphérique (46) de l'élément radial (32) et formant avec cette dernière la première liaison de type rotule (34).

5. Dispositif de liaison élastique (18) selon la revendication précédente, **caractérisé en ce que** chaque sous-ensemble cinématique (30) comprend une rotule (52) configurée pour se loger dans un des logements radiaux (50).

6. Dispositif de liaison élastique (18) selon les revendications 4 et 5, **caractérisé en ce que**, pour chaque sous-ensemble cinématique (30), la rotule (52) et le corps cylindrique (40) de l'élément radial (32) sont configurés pour permettre au corps cylindrique (40) de coulisser par rapport à la rotule (52) afin d'obtenir la liaison de type glissière ou pivot glissant (38) entre eux.

7. Dispositif de liaison élastique (18) selon l'une des revendications précédentes, **caractérisé en ce que** chaque élément élastique (58) est un ressort de compression.

8. Assemblage comprenant une première pièce (10) comportant un orifice (12), une deuxième pièce (14) traversant l'orifice (12) ainsi qu'un dispositif de liaison élastique (18) selon l'une des revendications précédentes intercalé entre les première et deuxième pièces (10, 14) et les reliant.

## Patentansprüche

1. Elastische Verbindungsvorrichtung (18), die zum Verbinden eines ersten und eines zweiten Teils (10, 14) eingerichtet ist und einen ersten und einen zweiten Ring (20, 22) aufweist, die voneinander beabstandet sind, die durch wenigstens zwei kinematische Untereinheiten (30) verbunden und so eingerichtet sind, dass sie einen ersten Zustand, in dem der zweite Ring (22) eine vorgegebene radiale und axiale Position in Bezug auf den ersten Ring (20) einnimmt, sowie einen zweiten Zustand einnehmen, in dem der zweite Ring (22) von der vorgegebenen radialen Position und/oder der vorgegebenen axialen Position in Bezug auf den ersten Ring (20) versetzt ist, wobei die kinematischen Untereinheiten (30) so eingerichtet sind, dass sie es dem ersten und dem zweiten Ring (20, 22) ermöglichen, sich relativ zueinander in wenigstens eine axiale Richtung und/oder wenigstens eine radiale Richtung zu bewegen, und wobei jede kinematische Untereinheit (30) ein Rückstellelement (58) aufweist, das so eingerichtet ist, dass es den ersten und den zweiten Ring (20, 22) in dem ersten Zustand hält, **dadurch gekennzeichnet, dass** jede kinematische Untereinheit (30) wenigstens ein radiales Element (32), das einen zylindrischen Körper (40) aufweist, wenigstens zwei Verbindungen vom Typ Kugelgelenk (34, 36) sowie wenigstens eine Verbindung vom Typ Gleiteinheit oder Gleitdreheinheit (38) umfasst, dass bei jedem radialen Element (32) der zweite Ring (22) eine radiale Aufnahme (50) aufweist und dass bei jeder kinematischen Untereinheit (30) das Rückstellelement (58) zwischen einem Boden (50.2) der radialen Aufnahme (50) und dem zylindrischen Körper (40) des radialen Elements (32) angeordnet ist.

2. Elastische Verbindungsvorrichtung (18) nach Anspruch 1, **dadurch gekennzeichnet, dass** die elastische Verbindungsvorrichtung drei kinematische Untereinheiten (30) aufweist, die über den Umfang des ersten oder zweiten Rings (20, 22) verteilt sind.

3. Elastische Verbindungsvorrichtung (18) nach einem der vorhergehenden Ansprüche, **dadurch gekennzeichnet, dass** bei jeder kinematischen Untereinheit (30) das radiale Element (32) einerseits mit dem ersten Ring (20) durch eine erste Verbindung (34) vom Typ Kugelgelenk und andererseits mit dem zweiten Ring (22) durch eine zweite Verbindung (36) vom Typ Kugelgelenk und eine Verbindung vom Typ Gleiteinheit oder Gleitdreheinheit (38) verbunden ist.

4. Elastische Verbindungsvorrichtung (18) nach dem vorhergehenden Anspruch, **dadurch gekennzeichnet, dass** jedes radiale Element (32) einen kugelförmigen Kopf (46) aufweist, der fest mit dem zylindrischen Körper (40) verbunden ist, und dass für jedes radiale Element (32) der erste Ring (20) einen kugelförmigen Sitz (48) aufweist, der so gestaltet ist, dass er den kugelförmigen Kopf (46) des radialen Elements (32) aufnimmt und mit diesem die erste Verbindung (34) vom Typ Kugelgelenk bildet.

5. Elastische Verbindungsvorrichtung (18) nach dem vorhergehenden Anspruch, **dadurch gekennzeichnet, dass** jede kinematische Untereinheit (30) ein Kugelgelenk (52) aufweist, das so eingerichtet ist, dass es in eine der radialen Aufnahmen (50) passt.

6. Elastische Verbindungsvorrichtung (18) nach den Ansprüchen 4 und 5, **dadurch gekennzeichnet, dass** für jede kinematische Untereinheit (30) das Kugelgelenk (52) und der zylindrische Körper (40) des radialen Elements (32) so eingerichtet sind, dass der zylindrische Körper (40) relativ zum Kugelgelenk (52) gleiten kann, um die Verbindung vom Typ Gleiteinheit oder Gleitdreheinheit (38) zwischen ihnen zu bewerkstelligen.

7. Elastische Verbindungsvorrichtung (18) nach einem der vorhergehenden Ansprüche, **dadurch gekennzeichnet, dass** das elastische Element (58) jeweils eine Druckfeder ist.

8. Baugruppe mit einem ersten Teil (10) mit einer Öffnung (12), einem zweiten Teil (14), das die Öffnung (12) durchquert, sowie einer elastischen Verbindungseinrichtung (18) nach einem der vorhergehenden Ansprüche, die zwischen dem ersten und dem zweiten Teil (10, 14) angeordnet ist und diese verbindet.

## Claims

1. Elastic connecting device (18) configured to connect first and second parts (10, 14), comprising first and second rings (20, 22) spaced from each other, connected by at least two kinematic subassemblies (30) and configured to occupy a first state in which the second ring (22) occupies given radial and axial positions relative to the first ring (20) as well as a second state in which the second ring (22) is offset from the given radial position and/or given radial position relative to the first ring (20), the kinematic subassemblies (30) being configured to allow the first and second rings (20, 22) to move relative to each other in at least one axial direction and/or at least one radial direction, each kinematic subassembly (30) comprising a return element (58) configured to hold the first and second rings (20, 22) in the first state, **characterized in that** each kinematic subassembly (30) comprises at least one radial element (32) comprising a cylindrical body (40), at least two ball-and-socket type connections (34, 36) as well as at least one slide or sliding pivot type connection (38) and **in that**, for each radial element (32), the second ring (22) comprises a radial housing (50) and **in that**, for each kinematic subassembly (30), the return element (58) is interposed between a bottom (50.2) of the radial housing (50) and the cylindrical body (40) of the radial element (32).

2. Elastic connection device (18) according to claim 1, wherein the elastic connection device comprises three kinematic subassemblies (30) distributed over the circumference of the first or second ring (20, 22).

3. Elastic connecting device (18) according to one of the preceding claims, wherein, for each kinematic subassembly (30), the radial element (32) is connected on the one hand to the first ring (20) by a first ball-and-socket type connection (34) and on the other hand to the second ring (22) by a second ball-and-socket type connection (36) and a slide or sliding pivot type connection (38).

4. Elastic connecting device (18) according to the preceding claim, wherein each radial element (32) comprises a spherical head (46) secured to the cylindrical body (40) and in that, for each radial element (32), the first ring (20) comprises a spherical seat (48) configured to receive the spherical head (46) of the radial element (32) and forming therewith the first ball-and-socket type connection (34).

5. Elastic connecting device (18) according to the preceding claim, wherein each kinematic subassembly (30) comprises a ball joint (52) configured to be housed in one of the radial housings (50).

6. Elastic connecting device (18) according to claims 4 and 5, wherein, for each kinematic subassembly (30), the ball joint (52) and the cylindrical body (40) of the radial element (32) are configured to allow the cylindrical body (40) to slide relative to the ball joint (52) in order to obtain the slide or sliding pivot type connection (38) between them.

7. Elastic connecting device (18) according to one of the preceding claims, wherein each elastic element (58) is a compression spring.

8. Assembly comprising a first part (10) comprising an orifice (12), a second part (14) passing through the orifice (12) as well as an elastic connecting device (18) according to one of the preceding claims interposed between the first and second parts (10, 14) and connecting them.
